# EUROPEAN PATENT APPLICATION

(11) **EP 4 478 589 A1**
(43) Date of publication of application: **18.12.2024**
(21) Application number: 23831614.5
(22) Date of filing: 30.06.2023
(51) Int. Cl.: H02K 9/19

(54) **ROTATING ELECTRICAL MACHINE**

(30) Priority: 30.06.2022 JP 2022105936
(71) Applicant: AISIN CORPORATION, Kariya-shi, Aichi 448-8650 (JP)
(72) Inventor: SUGIYAMA, Toshiya, Kariya-shi, Aichi 448-8650 (JP); MISHINA, Tokuhisa, Kariya-shi, Aichi 448-8650 (JP); SHIGYO, Hiromitsu, Kariya-shi, Aichi 448-8650 (JP); KAWANISHI, Yusaku, Kariya-shi, Aichi 448-8650 (JP); HATTORI, Katsuhiko, Kariya-shi, Aichi 448-8650 (JP)
(74) Representative: Kramer Barske Schmidtchen Patentanwälte PartG mbB
(86) International application number: PCT/JP2023/024308
(87) International publication number: WO 2024/005175

(57) **Abstract**

A case (3) that houses a stator (1) and a rotor (2) includes: a cylindrical inner case portion (31) including a fitting portion (311) that fits on a stator outer peripheral surface (11a); and a cylindrical outer case portion (32) disposed so as to cover an inner case outer peripheral surface (31a). A coolant channel (4) through which a coolant flows is formed between the inner case outer peripheral surface (31a) and an outer case inner peripheral surface (32a). The inner case portion (31) further includes an axially protruding portion (312) that protrudes in an axial direction (L) from the fitting portion (311) and that is located so as to cover at least an upper side of the coil end portion (13). A supply hole (5) for supplying oil toward the coil end portion (13) is provided in the axially protruding portion (312) at a position facing the coil end portion (13) from above. A supply oil passage (6) for supplying oil to the supply hole (5) is provided in the outer case portion (32).

## Description

### TECHNICAL FIELD

The present invention relates to rotating electrical machines including: a stator that includes a cylindrical stator core and a coil wound around the stator core; a rotor rotatably provided on the radially inner side with respect to the stator; and a case that houses them.

### BACKGROUND ART

An example of such a rotating electrical machine is disclosed in Patent Document 1 below. In the following description of the background art, signs used in Patent Document 1 are shown in parentheses.

In a rotating electrical machine (3) of Patent Document 1, a coil (12b) is wound around a stator core (12a) so as to form coil end portions (14) that protrude outward in an axial direction from the stator core (12a). An oil passage for supplying cooling oil to the coil end portions (14) is provided in a case that houses the stator (12) and a rotor (11).

### Related Art Documents

### Patent Documents

Patent Document 1: Japanese Unexamined Patent Application Publication No. 2014-225969 (JP 2014-225969 A)

### SUMMARY OF THE INVENTION

### Problem to be Solved by the Invention

In the rotating electrical machine (3) of Patent Document 1, the case includes: a tubular center housing (10) that covers the stator (12) from outside in a radial direction; and a side housing (30) joined to the center housing from one side in an axial direction. A groove (17) is formed in a surface of the center housing (10) that faces the side housing (30), and the groove is covered by the side housing (30) to form the above oil passage.

In such a configuration, the oil passage is formed at the joint between the center housing (10) and the side housing (30). Therefore, the configuration of the oil passage tends to be complicated. Moreover, since the joint between the center housing (10) and the side housing (30) needs to have a large radial dimension in order to seal the oil passage, the case tends to be large.

It is therefore desired to implement a rotating electrical machine that can reduce an increase in size of a case while simplifying the configuration of an oil passage for supplying oil to coil end portions.

### Means for Solving the Problem

As a characteristic configuration of a rotating electrical machine in view of the above, the rotating electrical machine includes:
a stator that includes a cylindrical stator core and a coil wound around the stator core;
a rotor rotatably provided on an inner side in a radial direction with respect to the stator; and a case that houses the stator and the rotor, wherein
the coil includes a coil end portion protruding outward in an axial direction from the stator core,
the case includes a cylindrical inner case portion including a fitting portion that fits on an outer peripheral surface of the stator core, and a cylindrical outer case portion disposed so as to cover an outer peripheral surface of the inner case portion,
a coolant channel through which a coolant flows is located between the outer peripheral surface of the inner case portion and an inner peripheral surface of the outer case portion, the inner case portion further includes an axially protruding portion that protrudes in the axial direction from the fitting portion and that is located so as to cover at least an upper side of the coil end portion,
a supply hole for supplying oil toward the coil end portion is provided in the axially protruding portion at a position facing the coil end portion from above, and a supply oil passage for supplying oil to the supply hole is provided in the outer case portion.

In this characteristic configuration, the axially protruding portion protruding in the axial direction from the fitting portion that fits on the outer peripheral surface of the stator core is provided in the inner case portion, and the supply hole for supplying oil toward the coil end portion is provided in the axially protruding portion at the position facing the coil end portion from above. The supply oil passage for supplying oil to the supply hole is provided in the outer case portion disposed so as to cover the outer peripheral surface of the inner case portion. This allows oil to be appropriately supplied toward the coil end portion and also makes it easy to simplify the configuration of the oil passage used for this purpose, i.e., the configuration of both the supply hole provided in the axially protruding portion of the inner case portion and the supply oil passage provided in the outer case portion. It is therefore possible to reduce an increase in size of the case while simplifying the configuration of the oil passage for supplying oil to the coil end portion.

### BRIEF DESCRIPTION OF THE DRAWINGS

[FIG. 1] FIG. 1 is a sectional view of a rotating electrical machine according to an embodiment.
[FIG. 2] FIG. 2 is a perspective view of an inner case portion of the rotating electrical machine according to the embodiment.
[FIG. 3] FIG. 3 is a perspective view of an inner case portion of a rotating electrical machine according to another embodiment.
[FIG. 4] FIG. 4 is a sectional view of a vehicle drive device including the rotating electrical machine according to the embodiment.
[FIG. 5] FIG. 5 is a sectional view showing the flow of oil in the vehicle drive device.
[FIG. 6] FIG. 6 is a sectional view showing the flow of oil in the vehicle drive device.
[FIG. 7] FIG. 7 is a sectional view showing the flow of oil in the vehicle drive device.

### MODES FOR CARRYING OUT THE INVENTION

A rotating electrical machine 100 according to an embodiment will be described below with reference to the drawings. The rotating electrical machine 100 according to the present embodiment is used as a driving power source for a vehicle such as a hybrid electric vehicle or a battery electric vehicle.

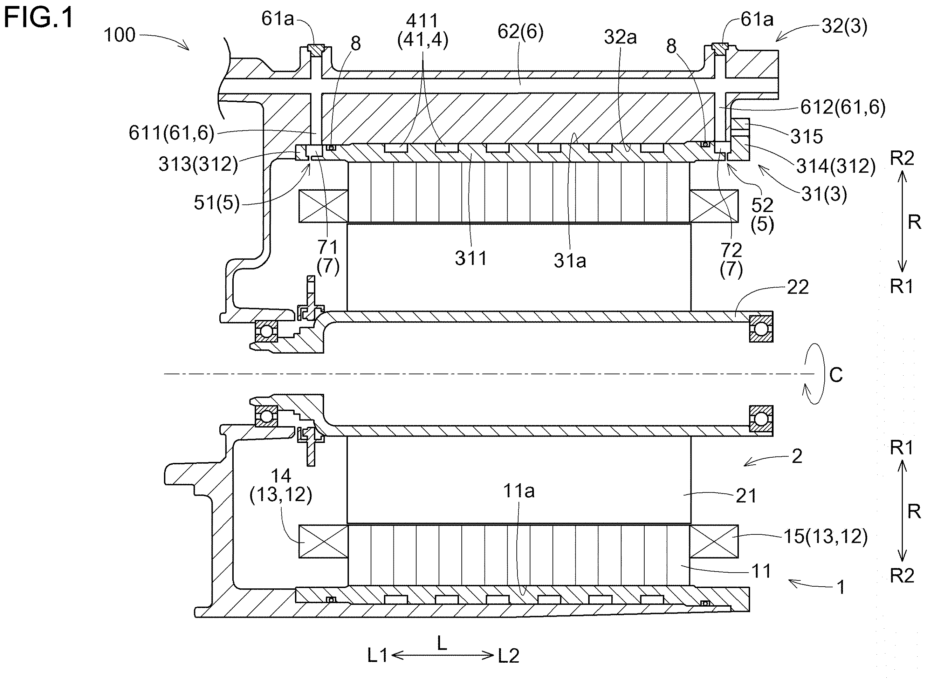

As shown in FIG. 1, the rotating electrical machine 100 includes a stator 1, a rotor 2 that is rotatable with respect to the stator 1, and a case 3 that houses the stator 1 and the rotor 2. In the present embodiment, the rotating electrical machine 100 further includes a rotor shaft 22 that rotates with the rotor 2.

In the following description, a direction along a rotation axis (see a long dashed short dashed line in FIG. 1) of the rotor 2 will be referred to as "axial direction L." One side in the axial direction L will be referred to as "first side L1 in the axial direction," and the other side in the axial direction L will be referred to as "second side L2 in the axial direction." A direction perpendicular to the rotation axis of the rotor 2 will be referred to as "radial direction R." In the radial direction R, the rotation axis side of the rotor 2 will be referred to as "radially inner side R1," and the opposite side will be referred to as "radially outer side R2." A direction about the rotation axis of the rotor 2 will be referred to as "circumferential direction C."

The stator 1 includes a cylindrical stator core 11 and a coil 12 wound around the stator core 11. The stator core 11 is fixed to a non-rotating member (in this example, the case 3). The coil 12 includes coil end portions 13 protruding outward in the axial direction L from the stator core 11. In the present embodiment, the coil end portions 13 include a first coil end portion 14 protruding from the stator core 11 toward the first side L1 in the axial direction, and a second coil end portion 15 protruding from the stator core 11 toward the second side L2 in the axial direction.

The rotor 2 is disposed on the radially inner side R1 with respect to the stator 1. The rotor 2 includes a cylindrical rotor core 21. In the present embodiment, the rotor core 21 is connected so as to rotate with the rotor shaft 22 extending in the axial direction L. The rotor shaft 22 is disposed on the radially inner side R1 with respect to the rotor core 21 so as to extend through the rotor core 21 in the axial direction L. Although not shown in the figures, the rotor core 21 is provided with permanent magnets.

The case 3 includes an inner case portion 31 and an outer case portion 32. Each of the inner case portion 31 and the outer case portion 32 is formed in a cylindrical shape. The outer case portion 32 is disposed on the radially outer side R2 with respect to the inner case portion 31. In this example, the outer case portion 32 is formed integrally with a gear mechanism housing case that houses a gear mechanism of a drive device for the above vehicle.

The inner case portion 31 and the outer case portion 32 are disposed such that an inner case outer peripheral surface 31a that is an outer peripheral surface of the inner case portion 31 and an outer case inner peripheral surface 32a that is an inner peripheral surface of the outer case portion 32 contact each other. The outer case portion 32 is thus disposed so as to cover the inner case outer peripheral surface 31a. In the present embodiment, the inner case outer peripheral surface 31a and the outer case inner peripheral surface 32a are in pressure contact with each other. As used herein, "be in pressure contact" means contacting under a pressure. In this example, the inner case portion 31 is press-fitted in the outer case portion 32.

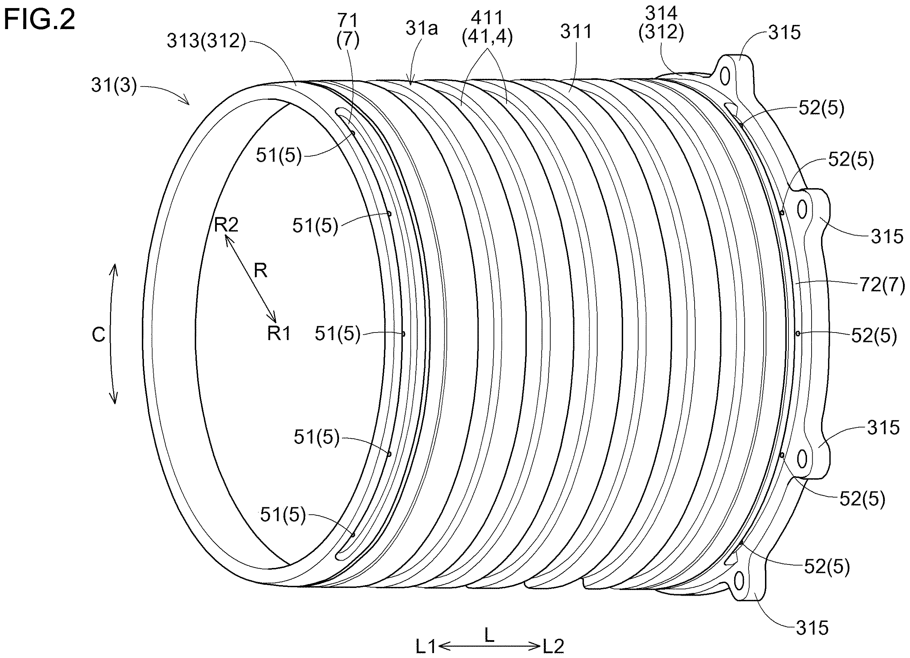

A coolant channel 4 through which a coolant flows is formed between the inner case outer peripheral surface 31a and the outer case inner peripheral surface 32a. The coolant channel 4 is composed of a coolant channel forming groove 41 formed in either or both of the inner case outer peripheral surface 31a and the outer case inner peripheral surface 32a. As shown in FIGS. 1 and 2, in the present embodiment, the coolant channel forming groove 41 is formed in the inner case outer peripheral surface 31a. In the present embodiment, the coolant channel forming groove 41 includes a plurality of circumferential extending portions 411 each formed in the circumferential direction C. The plurality of circumferential extending portions 411 is disposed spaced apart from each other in the axial direction L. The plurality of circumferential extending portions 411 communicates with each other.

As shown in FIG. 1, the inner case portion 31 includes a fitting portion 311 that fits on a stator outer peripheral surface 11a that is an outer peripheral surface of the stator core 11. In the present embodiment, an inner peripheral surface of the fitting portion 311 and the stator outer peripheral surface 11a are in pressure contact with each other. In this example, the fitting portion 311 is fitted on the stator outer peripheral surface 11a by shrink fitting. In the present embodiment, the coolant channel forming groove 41 is formed in the inner case outer peripheral surface 31a of a part of the inner case portion 31 that corresponds to the fitting portion 311.

The inner case portion 31 further includes axially protruding portions 312 formed so as to protrude in the axial direction L from the fitting portion 311. The axially protruding portions 312 are located so as to cover at least the upper sides of the coil end portions 13. In the present application, the terms "upper side" and "lower side" are defined based on the up-down direction of the rotating electrical machine 100 when mounted on a mounting target such as the above vehicle (up-down direction in FIG. 1).

In the present embodiment, the axially protruding portions 312 include a first axially protruding portion 313 formed so as to protrude from the fitting portion 311 toward the first side L1 in the axial direction, and a second axially protruding portion 314 formed so as to protrude from the fitting portion 311 toward the second side L2 in the axial direction. The first axially protruding portion 313 is disposed so as to cover at least the upper side of the first coil end portion 14. The second axially protruding portion 314 is disposed so as to cover at least the upper side of the second coil end portion 15. In the present embodiment, each of the first axially protruding portion 313 and the second axially protruding portion 314 is formed continuously along the entire circumference in the circumferential direction C. That is, in the present embodiment, each of the first axially protruding portion 313 and the second axially protruding portion 314 is formed in a cylindrical shape having an axis in the axial direction L.

In the present embodiment, the inner case portion 31 further includes a fixing portion 315 that is fixed to the outer case portion 32. In the present embodiment, the fixing portion 315 protrudes from an end on the second side L2 in the axial direction of the second axially protruding portion 314 toward the radially outer side R2 so as to face the outer case portion 32 from the second side L2 in the axial direction. In the example shown in FIG. 2, a plurality of the fixing portions 315 is located so as to be distributed in the circumferential direction C. Each of the plurality of fixing portions 315 is configured to be fixed to the outer case portion 32 by a bolt inserted through the fixing portion 315 from the second side L2 in the axial direction.

As shown in FIG. 1, supply holes 5 for supplying oil toward the coil end portions 13 are provided in the axially protruding portions 312 at positions facing the coil end portions 13 from above. As used herein, the "position facing the coil end portion 13 from above" means a position located above the coil end portion 13 and facing the coil end portion 13. Therefore, the supply holes 5 may be provided either at positions that overlap the coil end portions 13 as viewed in an up-down direction along the up-down direction (in other words, positions facing the coil end portions 13 in a direction along the up-down direction) or at positions that does not overlap the coil end portions 13 as viewed in the up-down direction (in other words, positions facing the coil end portions 13 in a direction tilted with respect to the up-down direction). In the present embodiment, the supply holes 5 are provided at positions that overlap the coil end portions 13 as viewed in the up-down direction, and are configured to drip oil toward the coil end portions 13. In the present embodiment, the supply holes 5 include a first supply hole 51 located in the first axially protruding portion 313 at a position facing the first coil end portion 14 from above, and a second supply hole 52 located in the second axially protruding portion 314 at a position facing the second coil end portion 15 from above.

In the present embodiment, circumferential grooves 7 are formed in either or both of the inner case outer peripheral surface 31a and the outer case inner peripheral surface 32a. The circumferential grooves 7 are formed in the shape of a recess extending in the circumferential direction C. In the present embodiment, the circumferential grooves 7 include a first circumferential groove 71 located on the first side L1 in the axial direction with respect to the coolant channel 4, and a second circumferential groove 72 located on the second side L2 in the axial direction with respect to the coolant channel 4. In the present embodiment, the first circumferential groove 71 is formed in the inner case outer peripheral surface 31a of a part of the inner case portion 31 that corresponds to the first axially protruding portion 313. The second circumferential groove 72 is formed in the inner case outer peripheral surface 31a of a part of the inner case portion 31 that corresponds to the second axially protruding portion 314.

As shown in FIG. 2, in the present embodiment, each of the first circumferential groove 71 and the second circumferential groove 72 is formed in a partial region in the circumferential direction C of the inner case outer peripheral surface 31a (e.g., in the range of an arc whose central angle as defined by the axis of the inner case portion 31 is 120 degrees).

In the present embodiment, a plurality of the first supply holes 51 is located so as to be distributed in the circumferential direction C. A plurality of the second supply holes 52 is also located so as to be distributed in the circumferential direction C. In the present embodiment, all of the plurality of first supply holes 51 are located so as to overlap the first coil end portion 14 as viewed in an up-down direction along the up-down direction (up-down direction in FIG. 1). All of the plurality of second supply holes 52 are also located so as to overlap the second coil end portion 15 as viewed in the up-down direction along the up-down direction. Regarding the arrangement of two elements, "overlap as viewed in a specific direction" means that, when an imaginary straight line parallel to the direction of the line of sight is moved in directions perpendicular to the imaginary straight line, there is an area where the imaginary straight line intersects both of the two elements.

In the present embodiment, each of the plurality of first supply holes 51 communicates with the first circumferential groove 71. The first circumferential groove 71 is located so as to overlap all of the plurality of first supply holes 51 as viewed in a radial direction along the radial direction R. In the present embodiment, each of the plurality of second supply holes 52 communicates with the second circumferential groove 72. The second circumferential groove 72 is located so as to overlap all of the plurality of second supply holes 52 as viewed in a radial direction along the radial direction R. In the illustrated example, five first supply holes 51 are located at equal intervals in the circumferential direction C. The five first supply holes 51 are formed so as to extend through the inner case portion 31 in the radial direction R from the bottom surface of the first circumferential groove 71. Five second supply holes 52 are also located at equal intervals in the circumferential direction C. The five second supply holes 52 are formed so as to extend through the inner case portion 31 in the radial direction R from the bottom surface of the second circumferential groove 72.

As shown in FIG. 1, a supply oil passage 6 for supplying oil to the supply holes 5 is provided in the outer case portion 32. In the present embodiment, the supply oil passage 6 is formed so as to communicate with the circumferential grooves 7. In the present embodiment, the supply oil passage 6 includes radial oil passages 61 formed in the radial direction R and an axial oil passage 62 formed in the axial direction L.

The radial oil passages 61 are formed so as to connect to the circumferential grooves 7. In the present embodiment, the radial oil passages 61 includes a first radial oil passage 611 formed so as to connect to the first circumferential groove 71, and a second radial oil passage 612 formed so as to connect to the second circumferential groove 72. The first radial oil passage 611 is formed so as to open to a part of the outer case inner peripheral surface 32a that faces the first circumferential groove 71. The second radial oil passage 612 is formed so as to open to a part of the outer case inner peripheral surface 32a that faces the second circumferential groove 72.

The axial oil passage 62 is formed so as to connect to the radial oil passages 61. Oil is supplied to the axial oil passage 62 from an oil supply source such as an oil pump, and the oil in the axial oil passage 62 is supplied to the circumferential grooves 7 through the radial oil passages 61. In the present embodiment, the axial oil passage 62 is formed so as to connect the first radial oil passage 611 and the second radial oil passage 612. The oil in the axial oil passage 62 is supplied to the first circumferential groove 71 through the first radial oil passage 611, and the oil in the axial oil passage 62 is supplied to the second circumferential groove 72 through the second radial oil passage 612. In the illustrated example, the axial oil passage 62 is formed so as to connect to an oil passage formed in the above gear mechanism housing case.

In the illustrated example, the radial oil passages 61 are formed by closing the ends on the radially outer side R2 of holes extending through the outer case portion 32 in the radial direction R with plugs 61a (example of a closing member). Forming the radial oil passages 61 in this manner using the holes formed in the outer case portion 32 makes it easier to ensure high flexibility in the formation positions of the radial oil passages 61 in the axial direction L, compared to a case where the radial oil passages 61 are formed using grooves formed in the mating surfaces between the outer case portion 32 and other case portions. Therefore, the configuration of the radial oil passages 61 formed so as to connect to the circumferential grooves 7 can be simplified, and the configuration of the supply oil passage 6 can be simplified.

As described above, the rotating electrical machine 100 is the rotating electrical machine 100 including:
the stator 1 that includes the cylindrical stator core 11 and the coil 12 wound around the stator core 11;
the rotor 2 rotatably provided on the radially inner side R1 with respect to the stator 1;
the case 3 that houses the stator 1 and the rotor 2.
The coil 12 includes the coil end portions 13 protruding outward in the axial direction L from the stator core 11.
The case 3 includes: the cylindrical inner case portion 31 including the fitting portion 311 that fits on the stator outer peripheral surface 11a of the stator core 11; and the cylindrical outer case portion 32 disposed so as to cover the inner case outer peripheral surface 31a of the inner case portion 31.
The coolant channel 4 through which a coolant flows is formed between the inner case outer peripheral surface 31a of the inner case portion 31 and the outer case inner peripheral surface 32a of the outer case portion 32.
The inner case portion 31 further includes the axially protruding portions 312 that protrude in the axial direction L from the fitting portion 311 and that are located so as to cover at least the upper sides of the coil end portions 13.
The supply holes 5 for supplying oil toward the coil end portions 13 are provided in the axially protruding portions 312 at the positions facing the coil end portions 13 from above. The supply oil passage 6 for supplying oil to the supply holes 5 is provided in the outer case portion 32.

In this configuration, the axially protruding portions 312 protruding in the axial direction L from the fitting portion 311 that fits on the stator outer peripheral surface 11a are provided in the inner case portion 31, and the supply holes 5 for supplying oil toward the coil end portions 13 are provided in the axially protruding portions 312 at the positions facing the coil end portions 13 from above. The supply oil passage 6 for supplying oil to the supply holes 5 is provided in the outer case portion 32 disposed so as to cover the inner case outer peripheral surface 31a. This allows oil to be appropriately supplied toward the coil end portions 13 and also makes it easy to simplify the configuration of the oil passage used for this purpose, i.e., the configuration of both the supply holes 5 provided in the axially protruding portions 312 of the inner case portion 31 and the supply oil passage 6 provided in the outer case portion 32. It is therefore possible to reduce an increase in size of the case 3 while simplifying the configuration of the oil passage for supplying oil to the coil end portions 13.

As described above, in the present embodiment, the circumferential grooves 7 in the shape of a recess extending in the circumferential direction C are formed in either or both of the inner case outer peripheral surface 31a of the inner case portion 31 and the outer case inner peripheral surface 32a of the outer case portion 32.
The supply oil passage 6 is formed so as to communicate with the circumferential grooves 7.
The plurality of supply holes 5 is located so as to be distributed in the circumferential direction C.
Each of the plurality of supply holes 5 communicates with the circumferential groove 7.

With this configuration, oil can be supplied to a plurality of positions in the circumferential direction C on each coil end portion 13. The coil end portions 13 can therefore be efficiently cooled.

In the present embodiment, each circumferential groove 7 is located so as to overlap all of the plurality of supply holes 5 as viewed in a radial direction along the radial direction R.
The supply oil passage 6 includes the radial oil passages 61 formed in the radial direction R so as to connect to the circumferential grooves 7, and the axial oil passage 62 formed in the axial direction L so as to connect to the radial oil passages 61.

In this configuration, each circumferential groove 7 formed in either or both of the inner case outer peripheral surface 31a and the outer case inner peripheral surface 32a is located so as to overlap all of the plurality of supply holes 5 distributed in the circumferential direction C, as viewed in a radial direction along the radial direction R. This makes it possible to appropriately supply oil to all of the plurality of supply holes 5 by a simple configuration.
In this configuration, the supply oil passage 6 for supplying oil to the supply holes 5 includes the radial oil passages 61 formed in the radial direction R so as to connect to the circumferential grooves 7, and the axial oil passage 62 formed in the axial direction L so as to connect to the radial oil passages 61. This makes it possible to appropriately supply oil to the circumferential grooves 7 by a simple configuration.

As shown in FIG. 1, in the present embodiment, the rotating electrical machine 100 further includes seal members 8 that seal between the inner case outer peripheral surface 31a and the outer case inner peripheral surface 32a. The seal members 8 are configured to seal between the inner case outer peripheral surface 31a and the outer case inner peripheral surface 32a in a watertight and oil-tight manner. The seal members 8 are disposed between the coolant channel 4 and the supply holes 5 in the axial direction L. On the other hand, no seal member 8 is disposed on the opposite side in the axial direction L of the supply holes 5 from the coolant channel 4. In the present embodiment, the seal members 8 are provided in both a groove formed in a part of the inner case outer peripheral surface 31a located between the coolant channel forming groove 41 and the first circumferential groove 71 in the axial direction L and a groove formed in a part of the inner case outer peripheral surface 31a located between the coolant channel forming groove 41 and the second circumferential groove 72 in the axial direction L. In this example, the seal members 8 are O-rings.

With this configuration, it is possible to avoid the coolant flowing through the coolant channel 4 from mixing with oil supplied to the supply holes 5 or leaking toward the stator 1.
Since oil that is supplied to the supply holes 5 is intended to cool the coil end portions 13, there is no problem even if the oil leaks toward the stator 1. Therefore, providing no seal member 8 on the opposite side in the axial direction L of the supply holes 5 from the coolant channel 4 as in this configuration makes it easier to reduce the dimension in the axial direction L of the rotating electrical machine 100.

In the present embodiment, the inner case portion 31 is made of a material that is different from and stronger than that of the outer case portion 32. For example, the material of the inner case portion 31 may be an aluminum alloy ADC8-T5, and the material of the outer case portion 32 may be an aluminum alloy ADC12-T5.

With this configuration, the fitting portion 311 of the inner case portion 31 can be fitted on the stator outer peripheral surface 11a with a relatively large force.

Hereinafter, a vehicle drive device 1000 including the above rotating electrical machine 100 will be described with reference to the drawings.

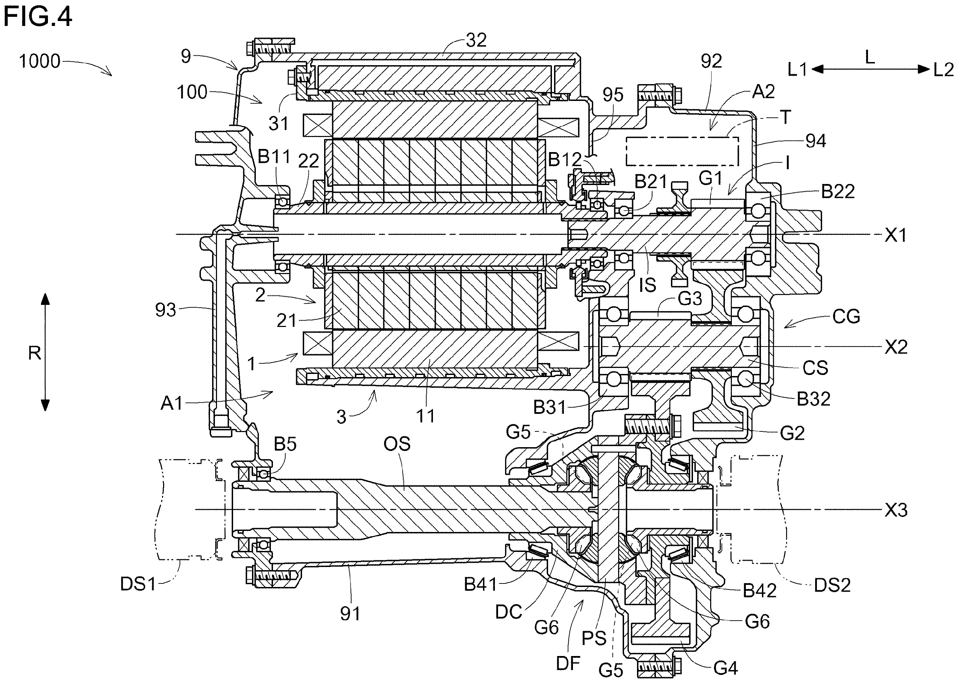

As shown in FIG. 4, the vehicle drive device 1000 includes, in addition to the above rotating electrical machine 100, an input member I, a counter gear mechanism CG, a differential gear mechanism DF, and a housing member 9.

The input member I is located on a first axis X1 that is a rotation axis of the rotor 2. The counter gear mechanism CG is located on a second axis X2 different from the first axis X1. The differential gear mechanism DF is located on a third axis X3 that is different from the first axis X1 and the second axis X2. The first axis X1, the second axis X2, and the third axis X3 are parallel to each other.

In the following description, a direction perpendicular to each of the above axes X1 to X3 will be referred to as "radial direction R" with respect to that axis. When it is not necessary to distinguish the axis to be used as a reference, or when the axis to be used as a reference is clear, the direction may be simply referred to as "radial direction R."

The housing member 9 houses the rotating electrical machine 100, the input member I, the counter gear mechanism CG, and the differential gear mechanism DF. A first housing portion A1 and a second housing portion A2 are formed inside the housing member 9. The first housing portion A1 is a space in which the rotating electrical machine 100 is housed. The second housing portion A2 is a space in which the input member I, the counter gear mechanism CG, and the differential gear mechanism DF are housed. The second housing portion A2 is located adjacent to the first housing portion A1 on the second side L2 in the axial direction.

The housing member 9 includes a first peripheral wall portion 91, a second peripheral wall portion 92, a first sidewall portion 93, a second sidewall portion 94, and a first partition wall portion 95.

The first peripheral wall portion 91 is formed in a tubular shape. The first peripheral wall portion 91 is disposed so as to cover the rotating electrical machine 100 from outside in the radial direction R.

The second peripheral wall portion 92 is formed in a tubular shape. The second peripheral wall portion 92 is disposed so as to cover the input member I, the counter gear mechanism CG, and the differential gear mechanism DF from outside in the radial direction R.

The first sidewall portion 93 is formed so as to extend in the radial direction R. The first sidewall portion 93 is disposed so as to cover the rotating electrical machine 100 from the first side L1 in the axial direction.

The second sidewall portion 94 is formed so as to extend in the radial direction R. The second sidewall portion 94 is disposed so as to cover the input member I, the counter gear mechanism CG, and the differential gear mechanism DF from the second side L2 in the axial direction.

The first partition wall portion 95 is formed so as to extend in the radial direction R. The first partition wall portion 95 is disposed to separate the first housing portion A1 and the second housing portion A2 in the axial direction L. In other words, the first partition wall portion 95 is disposed so as to cover the rotating electrical machine 100 from the second side L2 in the axial direction and to cover the input member I, the counter gear mechanism CG, and the differential gear mechanism DF from the first side L1 in the axial direction.

The first housing portion A1 is formed by the first peripheral wall portion 91, the first sidewall portion 93, and the first partition wall portion 95. In other words, the space surrounded by the first peripheral wall portion 91, the first sidewall portion 93, and the first partition wall portion 95 inside the housing member 9 is formed as the first housing portion A1.

The second housing portion A2 is formed by the second peripheral wall portion 92, the second sidewall portion 94, and the first partition wall portion 95. In other words, the space surrounded by the second peripheral wall portion 92, the second sidewall portion 94, and the first partition wall portion 95 inside the housing member 9 is formed as the second housing portion A2.

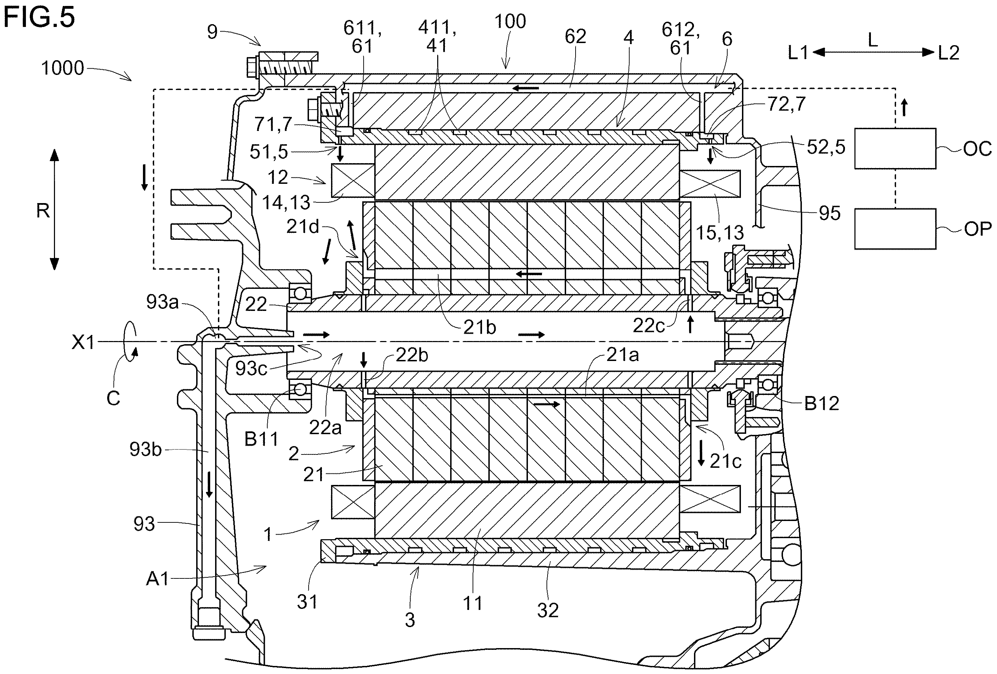

As shown in FIGS. 4 and 5, the input member I is a member that rotates with the rotor 2. The input member I includes an input gear G1 and an input shaft IS.

The input gear G1 is connected to the input shaft IS so as to rotate with the input shaft IS. The input shaft IS is formed so as to extend along the first axis X1. The input shaft IS passes through the first partition wall portion 95 in the axial direction L, and is connected to the rotor shaft 22 so as to rotate with the rotor shaft 22. The rotor shaft 22 is supported so as to be rotatable with respect to the first sidewall portion 93 via a first rotor bearing B11, and is supported so as to be rotatable with respect to the first partition wall portion 95 via a second rotor bearing B12. The input shaft IS is supported so as to be rotatable with respect to the first partition wall portion 95 via a first input bearing B21, and is supported so as to be rotatable with respect to the second sidewall portion 94 via a second input bearing B22.

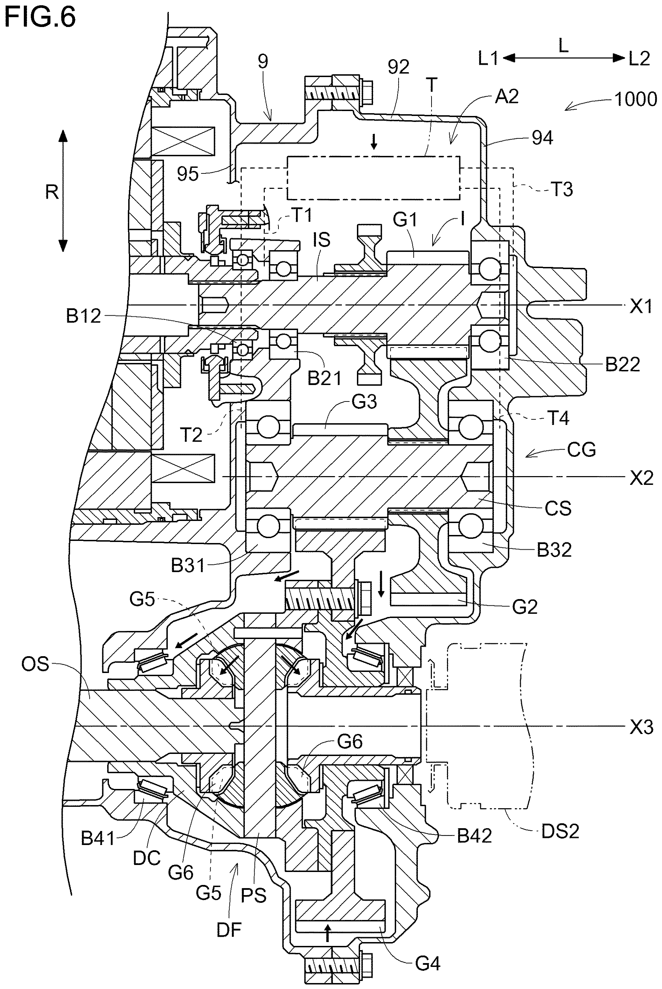

As shown in FIGS. 4 and 6, the counter gear mechanism CG includes a counter input gear G2, a counter output gear G3, and a counter shaft CS.

The counter input gear G2 and the counter output gear G3 are connected via the counter shaft CS so as to rotate together. The counter input gear G2 meshes with the input gear G1. The counter output gear G3 is formed with a smaller diameter than the counter input gear G2. The counter output gear G3 is disposed on the first side L1 in the axial direction with respect to the counter input gear G2.

The counter shaft CS is formed so as to extend along the second axis X2. The counter shaft CS is supported so as to be rotatable with respect to the first partition wall portion 95 via a first counter bearing B31, and is supported so as to be rotatable with respect to the second sidewall portion 94 via a second counter bearing B32.

The differential gear mechanism DF includes a differential input gear G4 that meshes with the counter output gear G3. The differential gear mechanism DF is configured to distribute rotation of the differential input gear G4 to a pair of wheels (not shown).

The differential gear mechanism DF includes a differential case DC, a pair of pinion gears G5, and a pair of side gears G6. Both the pair of pinion gears G5 and the pair of side gears G6 are bevel gears.

The differential case DC is a hollow member that houses the pair of pinion gears G5 and the pair of side gears G6. The differential case DC is connected to the differential input gear G4 so as to rotate with the differential input gear G4. The differential case DC is supported so as to be rotatable with respect to the first partition wall portion 95 via a first differential bearing B41, and is supported so as to be rotatable with respect to the second sidewall portion 94 via a second differential bearing B42.

The pair of pinion gears G5 is disposed so as to face each other and spaced apart from each other in the radial direction R with respect to the third axis X3. The pair of pinion gears G5 is attached to a pinion shaft PS supported so as to rotate with the differential case DC. Each of the pair of pinion gears G5 is rotatable (rotatable on its own axis) about the pinion shaft PS and is rotatable (revolvable) about the third axis X3.

The pair of side gears G6 meshes with the pair of pinion gears G5. The pair of side gears G6 is disposed so as to rotate about the third axis X3. The pair of side gears G6 is disposed so as to face each other and spaced apart from each other in the axial direction L with the pinion shaft PS interposed therebetween.

The side gear G6 on the first side L1 in the axial direction is connected via an output shaft member OS to a first drive shaft DS1 connected to the wheel on the first side L1 in the axial direction so that the side gear G6 rotates with the first drive shaft DS 1. The output shaft member OS is formed so as to extend along the third axis X3. The output shaft member OS is disposed so as to pass through the differential case DC in the axial direction L. The output shaft member OS is supported so as to be slidable with respect to the differential case DC. The output shaft member OS is disposed so as to pass through the first sidewall portion 93 in the axial direction L. The output shaft member OS is supported so as to be rotatable with respect to the first sidewall portion 93 via an output bearing B5.

The side gear G6 on the second side L2 in the axial direction is connected to a second drive shaft DS2 connected to the wheel on the second side L2 in the axial direction so that the side gear G6 rotates with the second drive shaft DS2. The side gear G6 on the second side L2 in the axial direction includes a tubular portion G6a formed in a tubular shape extending in the axial direction L. The tubular portion G6a is disposed so as to pass through the differential case DC and the second sidewall portion 94 in the axial direction L. The tubular portion G6a is supported so as to be slidable with respect to the differential case DC.

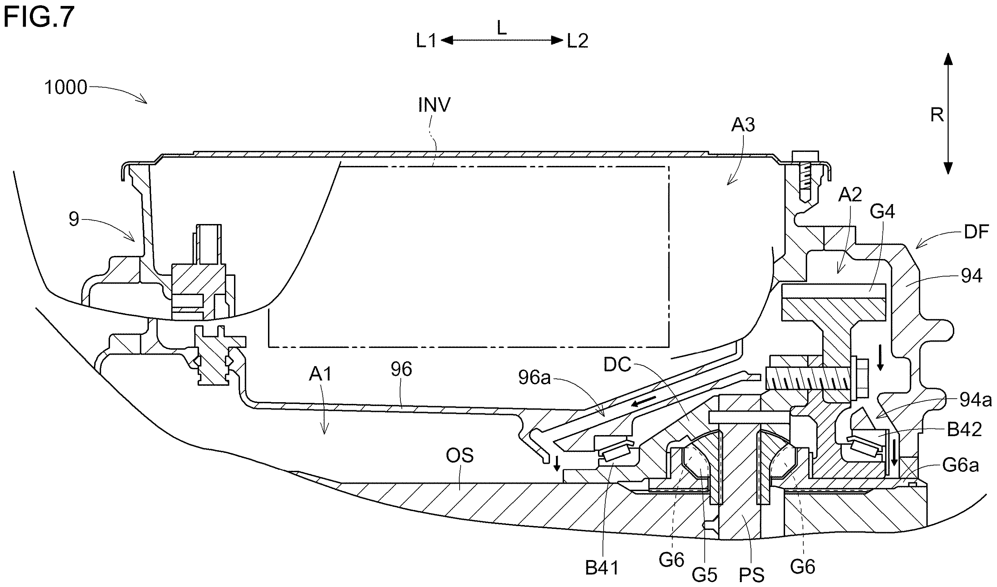

As shown in FIG. 7, the vehicle drive device 1000 includes an inverter device INV The inverter device INV is configured to control the rotating electrical machine 100.

In addition to the first housing portion A1 and the second housing portion A2, a third housing portion A3 is formed inside the housing member 9. The third housing portion A3 is a space in which the inverter device INV is housed. The third housing portion A3 is located adjacent to and above the first housing portion A1 and the second housing portion A2 when in a vehicle-mounted state. As used herein, the "vehicle-mounted state" refers to a state in which the vehicle drive device 1000 is mounted on the vehicle.

The housing member 9 further includes a second partition wall portion 96. The second partition wall portion 96 is formed so as to separate the first housing portion A1 and the second housing portion A2 from the third housing portion A3.

The flow of oil in the vehicle drive device 1000 will be described below with reference to FIGS. 5 to 7. In FIGS. 5 to 7, black arrows indicate the flow of oil.

As shown in FIG. 5, the vehicle drive device 1000 includes an oil pump OP that pumps up and discharges oil accumulated inside the housing member 9. The oil pump OP is driven by a dedicated driving force source (e.g., an electric motor) that is independent of a power transmission path between the rotating electrical machine 100 and the differential gear mechanism DF.

The oil discharged from the oil pump OP is cooled by an oil cooler OC. The oil cooled by the oil cooler OC is supplied to the axial oil passage 62. The oil supplied to the axial oil passage 62 is supplied to the second circumferential groove 72 through the second radial oil passage 612, and is supplied to the first circumferential groove 71 through the first radial oil passage 611. The oil supplied to the second circumferential groove 72 is supplied to the second coil end portion 15 through the second supply holes 52. The oil supplied to the first circumferential groove 71 is supplied to the first coil end portion 14 through the first supply holes 51. The oil supplied to the first coil end portion 14 cools the first coil end portion 14, and then flows along the outer peripheral surface of the rotor shaft 22 and is supplied to the first rotor bearing B 11.

The supply oil passage 6 is connected to an in-shaft oil passage 22a so as to supply oil to the in-shaft oil passage 22a. The in-shaft oil passage 22a is formed inside the rotor shaft 22 so as to extend in the axial direction L. In the present embodiment, the in-shaft oil passage 22a is an internal space of the rotor shaft 22 that is formed in a tubular shape about the first axis X1.

In the present embodiment, the oil supplied to the axial oil passage 62 flows through the axial oil passage 62 toward the first side L1 in the axial direction and is supplied to a first in-wall oil passage 93a formed in the first sidewall portion 93. The oil supplied to the first in-wall oil passage 93a is supplied to a second in-wall oil passage 93b that is formed in the first sidewall portion 93 so as to extend in the radial direction R. The oil supplied to the second in-wall oil passage 93b is supplied to a terminal block for electrically connecting the rotating electrical machine 100 and the inverter device INV (see FIG. 7), and cools the terminal block.

The oil supplied to the first in-wall oil passage 93a is also supplied to the in-shaft oil passage 22a from a supply port 93c. The supply port 93c opens toward the second side L2 in the axial direction inside the rotor shaft 22 so as to supply oil from the first side L1 in the axial direction to the in-shaft oil passage 22a.

The oil supplied to the in-shaft oil passage 22a is supplied to a first through hole 22b and a second through hole 22c that are formed so as to extend through the rotor shaft 22 in the radial direction R. The first through hole 22b and the second through hole 22c are through holes for supplying oil from the in-shaft oil passage 22a toward the coil end portions 13. The first through hole 22b is located on the first side L1 in the axial direction with respect to the rotor core 21. The second through hole 22c is located on the second side L2 in the axial direction with respect to the rotor core 21. A plurality of the first through holes 22b and a plurality of the second through holes 22c are provided so as to be distributed in the circumferential direction C.

In the present embodiment, the oil supplied to the in-shaft oil passage 22a is supplied through the first through hole 22b to a first in-core oil passage 21a formed so as to extend through the rotor core 21 in the axial direction L by a centrifugal force generated by rotation of the rotor shaft 22. The oil supplied to the in-shaft oil passage 22a is also supplied through the second through hole 22c formed so as to extend through the rotor shaft 22 in the radial direction R to a second in-core oil passage 21b formed so as to extend through the rotor core 21 in the axial direction L by the centrifugal force generated by rotation of the rotor shaft 22.

The oil supplied to the first in-core oil passage 21a flows through the first in-core oil passage 21a toward the second side L2 in the axial direction and reaches a first opening 21c that opens on the inner side in the radial direction R with respect to the second coil end portion 15. The oil having reached the first opening 21c is supplied to the second coil end portion 15 by a centrifugal force generated by rotation of the rotor 2.

The oil supplied to the second in-core oil passage 21b flows through the second in-core oil passage 21b toward the first side L1 in the axial direction and reaches a second opening 21d that opens on the inner side in the radial direction R with respect to the first coil end portion 14. The oil having reached the second opening 21d is supplied to the first coil end portion 14 by the centrifugal force generated by rotation of the rotor 2.

As shown in FIG. 6, the oil accumulated in the housing member 9 is scooped up by the differential input gear G4. The oil scooped up by the differential input gear G4 is supplied to the surface of the differential case DC. A part of the oil supplied to the surface of the differential case DC is supplied to each of the first differential bearing B41 and the second differential bearing B42. Another part of the oil supplied to the surface of the differential case DC passes through through holes formed in the differential case DC and is supplied to the pair of pinion gears G5 and the pair of side gears G6.

The oil scooped up by the differential input gear G4 is also supplied to a catch tank T provided inside the housing member 9. The catch tank T is configured to store the oil scooped up by the differential input gear G4. The catch tank T is configured to supply the oil stored therein to each of the second rotor bearing B12 and the first input bearing B21 through a first tank oil passage T1. The catch tank T is also configured to supply the oil stored therein to the first counter bearing B31 through a second tank oil passage T2. The catch tank T is also configured to supply the oil stored therein to the second input bearing B22 through a third tank oil passage T3. The catch tank T is also configured to supply the oil stored therein to the second counter bearing B32 through a fourth tank oil passage T4.

As shown in FIG. 7, the oil scooped up by the differential input gear G4 passes through a first differential oil passage 96a formed in the second partition wall portion 96, is supplied to an area located on the first side L1 in the axial direction with respect to, and adjacent to, an end on the first side L1 in the axial direction of the differential case DC, and is then supplied from the first side L1 in the axial direction to a sliding portion between the differential case DC and the output shaft member OS. The oil scooped up by the differential input gear G4 also passes through a second differential oil passage 94a formed in the second sidewall portion 94, is supplied to an area located on the second side L2 in the axial direction with respect to, and adjacent to, an end on the second side L2 in the axial direction of the differential case DC, and is then supplied from the second side L2 in the axial direction to a sliding portion between the differential case DC and the tubular portion G6a.

### [Other Embodiments]

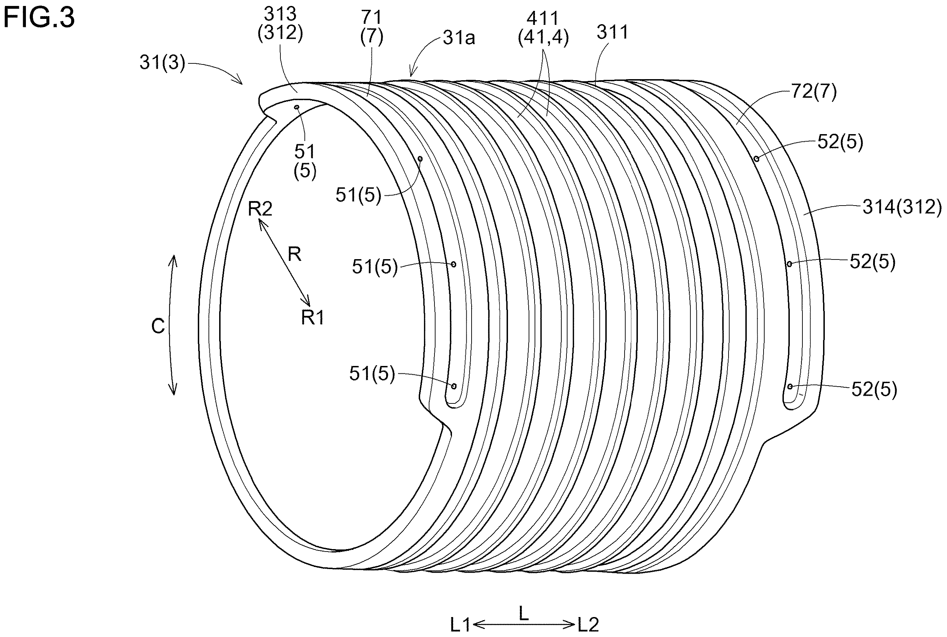

(1) The above embodiment illustrates an example in which each of the first axially protruding portion 313 and the second axially protruding portion 314 is formed continuously along the entire circumference in the circumferential direction C. However, the present disclosure is not limited to such a configuration. Either or both of the first axially protruding portion 313 and the second axially protruding portion 314 may be formed along only a part of the circumference in the circumferential direction C, or may have its or their part in the circumferential direction C cut out. For example, as shown in FIG. 3, the first axially protruding portion 313 may be formed along the area in the circumferential direction C where the first circumferential groove 71 is located, and the second axially protruding portion 314 may be formed along the area in the circumferential direction C where the second circumferential groove 72 is located. In this case, the first axially protruding portion 313 and the second axially protruding portion 314 are provided above the rotation axis of the rotor 2, and are not provided below the rotation axis of the rotor 2. With this configuration, for example, a member for connecting the coil 12 to another device can be easily disposed using an area in the circumferential direction C where the first axially protruding portion 313 and the second axially protruding portion 314 are not provided. This makes it easier to reduce the dimension in the axial direction L of the rotating electrical machine 100.
(2) The above embodiment illustrates an example in which all of the plurality of first supply holes 51 overlap the first coil end portion 14 as viewed in an up-down direction along the up-down direction, and all of the plurality of second supply holes 52 overlap the second coil end portion 15 as viewed in an up-down direction along the up-down direction. However, the present disclosure is not limited to such a configuration. Part of the plurality of first supply holes 51 may not overlap the first coil end portion 14 as viewed in the up-down direction, and part of the plurality of second supply holes 52 may not overlap the second coil end portion 15 as viewed in the up-down direction. In this case, the plurality of supply holes 5 is suitably formed in the radial direction R and configured to inject oil toward the coil end portions 13. The plurality of supply holes 5 may be formed along the up-down direction.
(3) The above embodiment illustrates an example in which each of the first circumferential groove 71 and the second circumferential groove 72 is formed in a partial region in the circumferential direction C of the inner case outer peripheral surface 31a. However, the present disclosure is not limited to such a configuration. Either or both of the first circumferential groove 71 and the second circumferential groove 72 may be formed in the outer case inner peripheral surface 32a rather than in the inner case outer peripheral surface 31a, or may be formed in both the inner case outer peripheral surface 31a and the outer case inner peripheral surface 32a. Either or both of the first circumferential groove 71 and the second circumferential groove 72 may be formed along the entire circumference in the circumferential direction C.
(4) The above embodiment illustrates an example in which the supply holes 5 include the first supply holes 51 and the second supply holes 52. However, the present disclosure is not limited to such a configuration. The supply holes 5 may not include the first supply holes 51 or the second supply holes 52. For example, in the case where the supply holes 5 do not include the second supply holes 52, it is suitable to supply cooling oil from a supply portion that is in a different form from the supply holes 5 (e.g., a supply portion provided on the radially inner side R1 with respect to the second coil end portion 15) to the second coil end portion 15. In the case where the supply holes 5 do not include the first supply holes 51 or the second supply holes 52, the axially protruding portions 312 may not include the first axially protruding portion 313 or the second axially protruding portion 314.
(5) The above embodiment illustrates an example in which the first circumferential groove 71 is formed in the inner case outer peripheral surface 31a of a part of the inner case portion 31 that corresponds to the first axially protruding portion 313, and the second circumferential groove 72 is formed in the inner case outer peripheral surface 31a of a part of the inner case portion 31 that corresponds to the second axially protruding portion 314. However, the present disclosure is not limited to such a configuration. Either or both of the first circumferential groove 71 and the second circumferential groove 72 may be formed in the inner case outer peripheral surface 31a of a part other than the part of the inner case portion 31 that corresponds to the axially protruding portion 312 (e.g., a part corresponding to the fitting portion 311). In this case, it is suitable that the circumferential grooves 7 and the supply holes 5 communicate with each other through grooves formed in the axial direction L.
(6) The above embodiment illustrates an example in which the inner case portion 31 and the outer case portion 32 are made of different materials. However, the present disclosure is not limited to such a configuration. The inner case portion 31 and the outer case portion 32 may be made of the same material.
(7) The above embodiment illustrates an example in which oil in the in-shaft oil passage 22a is supplied to the first in-core oil passage 21a through the first through hole 22b and is supplied to the second in-core oil passage 21b through the second through hole 22c. However, the present disclosure is not limited to such a configuration. For example, oil in the in-shaft oil passage 22a may be directly supplied from the first through hole 22b to the first coil end portion 14 and directly supplied from the second through hole 22c to the second coil end portion 15.
(8) The above embodiment illustrates an example in which the first through hole 22b and the second through hole 22c are formed at two different positions in the axial direction L in the rotor shaft 22. However, the present disclosure is not limited to such a configuration. A through hole(s) may be formed at one position or three or more different positions in the axial direction L in the rotor shaft 22.
(9) The configuration disclosed in each of the above embodiments can be applied in combination with the configurations disclosed in the other embodiments as long as no contradiction arises. Regarding the other configurations as well, the embodiments disclosed in the present specification are merely illustrative in all respects. Therefore, various modifications can be made as appropriate without departing from the spirit and scope of the present disclosure.

### [Summary of Embodiment]

Hereinafter, a summary of the rotating electrical machine (100) described above will be provided.

The rotating electrical machine (100) includes: a stator (1) that includes a cylindrical stator core (11) and a coil (12) wound around the stator core (11); a rotor (2) rotatably provided on an inner side (R1) in a radial direction (R) with respect to the stator (1); and a case (3) that houses the stator (1) and the rotor (2). The coil (12) includes a coil end portion (13) protruding outward in an axial direction (L) from the stator core (11). The case (3) includes a cylindrical inner case portion (31) including a fitting portion (311) that fits on an outer peripheral surface (11a) of the stator core (11), and a cylindrical outer case portion (32) disposed so as to cover an outer peripheral surface (31a) of the inner case portion (31). A coolant channel (4) through which a coolant flows is located between the outer peripheral surface (31a) of the inner case portion (31) and an inner peripheral surface (32a) of the outer case portion (32). The inner case portion (31) further includes an axially protruding portion (312) that protrudes in the axial direction (L) from the fitting portion (311) and that is located so as to cover at least an upper side of the coil end portion (13). A supply hole (5) for supplying oil toward the coil end portion (13) is provided in the axially protruding portion (312) at a position facing the coil end portion (13) from above. A supply oil passage (6) for supplying oil to the supply hole (5) is provided in the outer case portion (32).

In this configuration, the axially protruding portion (312) protruding in the axial direction (L) from the fitting portion (311) that fits on the stator outer peripheral surface (11a) is provided in the inner case portion (31), and the supply hole (5) for supplying oil toward the coil end portion (13) is provided in the axially protruding portion (312) at the position facing the coil end portion (13) from above. The supply oil passage (6) for supplying oil to the supply hole (5) is provided in the outer case portion (32) disposed so as to cover the outer peripheral surface (31a) of the inner case portion (31). This allows oil to be appropriately supplied toward the coil end portion (13) and also makes it easy to simplify the configuration of the oil passage used for this purpose, i.e., the configuration of both the supply hole (5) provided in the axially protruding portion (312) of the inner case portion (31) and the supply oil passage (6) provided in the outer case portion (32). It is therefore possible to reduce an increase in size of the case (3) while simplifying the configuration of the oil passage for supplying oil to the coil end portion (13).

Suitably, a circumferential groove (7) in a shape of a recess extending in a circumferential direction (C) is located in either or both of the outer peripheral surface (31a) of the inner case portion (31) and the inner peripheral surface (32a) of the outer case portion (32), the supply oil passage (6) is provided so as to communicate with the circumferential groove (7), a plurality of the supply holes (5) is located so as to be distributed in the circumferential direction (C), and each of the plurality of supply holes (5) communicates with the circumferential groove (7), the circumferential direction (C) being a direction about a rotation axis of the rotor (2).

With this configuration, oil can be supplied to a plurality of positions in the circumferential direction (C) on the coil end portion (13). The coil end portion (13) can therefore be efficiently cooled.

Suitably, the circumferential groove (7) is located so as to overlap all of the plurality of supply holes (5) as viewed in a radial direction along the radial direction (R), and the supply oil passage (6) includes a radial oil passage (61) provided in the radial direction (R) so as to connect to the circumferential groove (7), and an axial oil passage (62) provided in the axial direction (L) so as to connect to the radial oil passage (61).

In this configuration, the circumferential groove (7) formed in either or both of the outer peripheral surface (31a) of the inner case portion (31) and the inner peripheral surface (32a) of the outer case portion (32) is located so as to overlap all of the plurality of supply holes (5) distributed in the circumferential direction (C), as viewed in a radial direction along the radial direction (R). This makes it possible to appropriately supply oil to all of the plurality of supply holes (5) by a simple configuration.
In this configuration, the supply oil passage (6) for supplying oil to the supply holes (5) includes the radial oil passage (61) formed in the radial direction (R) so as to connect to the circumferential groove (7), and the axial oil passage (62) formed in the axial direction (L) so as to connect to the radial oil passage (61). This makes it possible to appropriately supply oil to the circumferential groove (7) by a simple configuration.

Suitably, the rotating electrical machine (100) further includes a rotor shaft (22) that rotates with the rotor (2), an in-shaft oil passage (22a) extending in the axial direction (L) is provided inside the rotor shaft (22), the supply oil passage (6) is connected to the in-shaft oil passage (22a) so as to supply oil to the in-shaft oil passage (22a), and a through hole (22b, 22c) for supplying oil in the in-shaft oil passage (22a) toward the coil end portion (13) is provided so as to extend through the rotor shaft (22) in the radial direction (R).

According to this configuration, in addition to supplying oil to the coil end portion (13) from outside in the radial direction (R) through the supply hole (5), oil can be supplied to the coil end portion (13) from inside in the radial direction (R) through the through hole (22b, 22c). This allows a sufficient amount of oil to be supplied to the coil end portion (13). Therefore, conductors of the coil end portion (13) can be effectively insulated from each other by oil. Insulating the conductors of the coil end portion (13) by oil is particularly effective in a high-voltage, high-power vehicle drive device (1000) with a relatively high system voltage (e.g., 800 V or more).

Suitably, the rotating electrical machine (100) further includes a seal member (8) that seals between the outer peripheral surface (31a) of the inner case portion (31) and the inner peripheral surface (32a) of the outer case portion (32), and the seal member (8) is disposed between the coolant channel (4) and the supply hole (5) in the axial direction (L), and is not disposed on an opposite side in the axial direction (L) of the supply hole (5) from the coolant channel (4).

With this configuration, it is possible to avoid the coolant flowing through the coolant channel (4) from mixing with oil supplied to the supply hole (5) or leaking toward the stator (1).
Since oil that is supplied to the supply hole (5) is intended to cool the coil end portion (13), there is no problem even if the oil leaks toward the stator (1). Therefore, providing no seal member (8) on the opposite side in the axial direction (L) of the supply hole (5) from the coolant channel (4) as in this configuration makes it easier to reduce the dimension in the axial direction (L) of the rotating electrical machine (100).

Suitably, the inner case portion (31) is made of a material that is different from and stronger than a material of the outer case portion (32).

With this configuration, the fitting portion (311) of the inner case portion (31) can be fitted on the outer peripheral surface (11a) of the stator core (11) with a relatively large force.

### INDUSTRIAL APPLICABILITY

The technique according to the present disclosure can be applied to rotating electrical machines including: a stator that includes a cylindrical stator core and a coil wound around the stator core; a rotor rotatably provided on the radially inner side with respect to the stator; and a case that houses them.

### Description of the Reference Numerals

100: rotating electrical machine, 1: stator, 11: stator core, 11a: stator outer peripheral surface, 12: coil, 13: coil end portion, 2: rotor, 3: case, 31: inner case portion, 31a: inner case outer peripheral surface, 311: fitting portion, 312: axially protruding portion, 32: outer case portion, 32a: outer case inner peripheral surface, 4: coolant channel, 5: supply hole, 6: oil supply passage, L: axial direction, R: radial direction, C: circumferential direction

## Claims

1. A rotating electrical machine, comprising:
a stator that includes a cylindrical stator core and a coil wound around the stator core;
a rotor rotatably provided on an inner side in a radial direction with respect to the stator; and
a case that houses the stator and the rotor, wherein
the coil includes a coil end portion protruding outward in an axial direction from the stator core,
the case includes a cylindrical inner case portion including a fitting portion that fits on an outer peripheral surface of the stator core, and a cylindrical outer case portion disposed so as to cover an outer peripheral surface of the inner case portion,
a coolant channel through which a coolant flows is located between the outer peripheral surface of the inner case portion and an inner peripheral surface of the outer case portion,
the inner case portion further includes an axially protruding portion that protrudes in the axial direction from the fitting portion and that is located so as to cover at least an upper side of the coil end portion,
a supply hole for supplying oil toward the coil end portion is provided in the axially protruding portion at a position facing the coil end portion from above, and
a supply oil passage for supplying oil to the supply hole is provided in the outer case portion.

2. The rotating electrical machine according to claim 1, wherein
a circumferential groove in a shape of a recess extending in a circumferential direction is located in either or both of the outer peripheral surface of the inner case portion and the inner peripheral surface of the outer case portion,
the supply oil passage is provided so as to communicate with the circumferential groove,
a plurality of the supply holes is located so as to be distributed in the circumferential direction, and
each of the plurality of supply holes communicates with the circumferential groove, the circumferential direction being a direction about a rotation axis of the rotor.

3. The rotating electrical machine according to claim 2, wherein
the circumferential groove is located so as to overlap all of the plurality of supply holes as viewed in a radial direction along the radial direction, and
the supply oil passage includes a radial oil passage provided in the radial direction so as to connect to the circumferential groove, and an axial oil passage provided in the axial direction so as to connect to the radial oil passage.

4. The rotating electrical machine according to claim 1, further comprising a rotor shaft that rotates with the rotor, wherein
an in-shaft oil passage extending in the axial direction is provided inside the rotor shaft,
the supply oil passage is connected to the in-shaft oil passage so as to supply oil to the in-shaft oil passage, and
a through hole for supplying oil in the in-shaft oil passage toward the coil end portion is provided so as to extend through the rotor shaft in the radial direction.

5. The rotating electrical machine according to any one of claims 1 to 4, further comprising a seal member that seals between the outer peripheral surface of the inner case portion and the inner peripheral surface of the outer case portion, wherein the seal member is disposed between the coolant channel and the supply hole in the axial direction, and is not disposed on an opposite side in the axial direction of the supply hole from the coolant channel.

6. The rotating electrical machine according to any one of claims 1 to 4, wherein the inner case portion is made of a material that is different from and stronger than a material of the outer case portion.
